# EUROPEAN PATENT SPECIFICATION

(11) **EP 3 013 611 B1**
(45) Date of publication and mention of the grant of the patent: **19.07.2017**
(21) Application number: 14784243.9
(22) Date of filing: 15.10.2014
(51) Int. Cl.: B60C 23/04, B60C 23/06

(54) **METHOD AND MALFUNCTION DETECTION SYSTEM FOR DETECTING A MALFUNCTION OF A PRESSURE SENSOR OF A TIRE PRESSURE MONITORING SYSTEM OF A VEHICLE**
REIFENDRUCKSENSOR-FEHLFUNKTIONSDETEKTIONSVERFAHREN UND SYSTEM
PROCÉDÉ ET SYSTÈME DE DÉTECTION DE DYSFONCTIONNEMENT DU CAPTEUR DE PRESSION DE PNEU

(30) Priority: 15.10.2013 EP 13188794
(43) Date of publication of application: 04.05.2016
(73) Proprietor: Continental Automotive GmbH, 30165 Hannover (DE)
(72) Inventor: CIMPONERIU, Andrei, R-300344 Timisoara (RO)
(86) International application number: PCT/EP2014/072128
(87) International publication number: WO 2015/055722

(56) References cited:
- FR-A1- 2 874 086
- US-A1- 2010 083 747

## Description

The present invention concerns a method and a system to detect a malfunction of a pressure sensor of a wheel unit (WU) of a tire pressure monitoring system (TPMS).

Directly measuring tire pressure monitoring systems for vehicles are known, in which wheel units are arranged at the wheels to measure a pressure within the tire using a pressure transducer. The pressure readings of the wheel units are wirelessly transmitted to a receiver on the vehicle side. Due to the TPMS, it becomes possible to quickly detect underinflated tires, such that the safety is increased. Moreover, if the tires are operated at an optimal pressure, fuel is saved.

In TPMS, the pressure sensors of the wheel units may sometimes fail. When they do so, their measured pressure no longer corresponds to the actual tire pressure. However, it is typically required for example by law that TPMS malfunction be detected and transmitted to the driver of the vehicle.

Given the importance of tire pressure monitoring, a variety of pressure monitoring sensors and systems have been proposed.

US 4 334 428 discloses a pressure sensor. It involves a variable inductor whose core is, within a bellows, able to move according to the tire pressure. That inductor is part of a resonating circuit, whose resonating frequency is a function of the tire pressure. The positions of the core and the values of the resonating frequency normally fall within a predetermined range. A failure of the sensor means movement of the core and of the resonating frequency outside the normal position range.

US 5 814 725 describes a tire pressure sensor that uses a diaphragm, a piston, a rotating shaft and an annular magnet. The deformation of the diaphragm and the position of the piston, which then translate into an angular position of the magnet, reciprocate the tire pressure. The position of the magnet is detected by a Hall element. Underpressure is detected as large positive voltage generated by the Hall element; overpressure corresponds to large negative voltage and normal pressures correspond to values that are in-between.

FR 2 874 086 Al discloses a method according to the respective preamble of independent claims 1 and 6. US 2010/083747 Al discloses a method and a monitoring unit for monitoring a tire of a vehicle that record a first measured value of revolutions of a tire with a first sensor. In addition, a second measured value of the revolutions of a tire is recorded with a second sensor. Alternatively, a second measured value of a second, different measured variable of a tire can also be recorded. In a further step, the directly measured or derived measured values of a measured variable are compared and an error signal is generated if a determined deviation is greater than a predefinable tolerance value.

It is an object of the present invention to provide a method and a malfunction detection system for detecting a malfunction of a pressure sensor of a tire pressure monitoring system of a vehicle, with which a malfunction of the pressure sensor may be detected in an effective way.

This object is accomplished by the subject matter of the independent claims. Further embodiments are given by the features of the dependent claims.

An aspect of the present invention relates to a method for detecting a malfunction of a pressure sensor of a tire pressure monitoring system (TPMS) of a vehicle, wherein, when the vehicle is in motion and a wheel of the vehicle to which the pressure sensor is mounted is rolling on a ground, pressure values measured by the pressure sensor are analyzed to determine if the pressure values include variations, wherein a malfunction of the pressure sensor is determined based on a comparison of a value of a pressure data parameter characterizing the variations and a threshold value characterizing a noise value of the pressure sensor.

Using the method, a malfunction of the pressure sensor may be detected in an effective way, in particular in cases where the pressure sensor is subject to a malfunction causing it to detect and report a false constant, for example an apparently normal pressure or any other constant pressure value. As will be explained in detail below, to this end, pressure fluctuations occurring during a rotation of the wheel of the vehicle to which the pressure sensor is mounted may be exploited to determine whether the pressure sensor works correctly or not.

In an embodiment of the method, a malfunction of the pressure sensor is determined if the value of the pressure data parameter is smaller than the threshold value.

In a further embodiment of the method, the pressure values measured by the pressure sensor are analyzed to determine if the pressure values include variations corresponding to an angular rotation speed and/or a rotation angle of the wheel.

The pressure data parameter may be determined by at least one of:
- determining a peak-to-peak variation of the pressure values from which an average pressure value is subtracted;
- determining a standard deviation of the pressure values from which an average pressure value is subtracted;
- performing an autocorrelation and/or an autocovariance of the pressure values;
- performing a spectral analysis and/or a Fourier analysis of the pressure values;
- determining a cross-correlation and/or a cross-covariance between the pressure values and angular motion data from a wheel motion sensor; and
- performing a synchronous detection of pressure data from which an average pressure value is subtracted, using a rotation angle information from a wheel motion sensor.

In an embodiment of the method, the threshold value is selected from the group consisting of
- a constant value characterizing an assumed noise value of the pressure sensor and a constant sensitivity of the pressure sensor;
- a function based on an actual pressure and/or an actual temperature of the wheel;
- an adaptive value or an adaptive function, determined based on a noise value of the pressure sensor measured when the wheel is standing still.

A further aspect of the invention relates to a malfunction detection system for detecting a malfunction of a pressure sensor of a tire pressure monitoring system of a vehicle. The malfunction detection system comprises a failure detection unit configured to analyze pressure values measured by the pressure sensor to determine if the pressure values include variations. The failure detection unit is further configured to determine a malfunction of the pressure sensor based on a comparison of a value of a pressure data parameter characterizing the variations and a threshold value characterizing a noise value of the pressure sensor. Moreover, the malfunction detection system comprises a motion sensor and a motion data processing and detection unit configured to determine if a wheel of the vehicle to which the pressure sensor is mounted is rolling on a ground.

The malfunction detection system may detect a malfunction of the pressure sensor in an effective way, as already explained above with reference to the method for detecting a malfunction of a pressure sensor of a tire pressure monitoring system of a vehicle.

In an embodiment of the malfunction detection system, the motion data processing and detection unit is configured to activate the failure detection unit, in particular if the wheel of the vehicle to which the pressure sensor is mounted is rolling on the ground.

In an embodiment of the malfunction detection system, the motion data processing and detection unit is configured to activate the failure detection unit, if the wheel of the vehicle to which the pressure sensor is mounted is rolling on the ground.

In a further embodiment of the malfunction detection system, the failure detection unit is configured to determine a malfunction of the pressure sensor if the value of the pressure data parameter is smaller than the threshold value.

In a further embodiment of the malfunction detection system, the failure detection unit is configured to analyze the pressure values measured by the pressure sensor to determine if the pressure values include variations corresponding to an angular rotation speed and/or a rotation angle of the wheel.

The motion sensor and/or the motion data processing and detection unit may comprise at least one of
- an acceleration sensor;
- a sensor configured to detect a contact of the tire with a ground;
- a tachometer; and
- a navigation system.

In a further embodiment of the malfunction detection system, the failure detection unit is configured to determine the pressure data parameter by at least one of:
- determining a peak-to-peak variation of the pressure values from which an average pressure value is subtracted;
- determining a standard deviation of the pressure values from which an average pressure value is subtracted;
- performing an autocorrelation and/or an autocovariance of the pressure values;
- performing a spectral analysis and/or a Fourier analysis of the pressure values;
- determining a cross-correlation and/or a cross-covariance between the pressure values and angular motion data from a wheel motion sensor; and
- performing a synchronous detection of pressure data from which an average pressure value is subtracted, using a rotation angle information from a wheel motion sensor.

The malfunction detection system may further comprise a wheel unit mounted to the wheel, wherein the wheel unit comprises the pressure sensor, the failure detection unit, the motion sensor and the motion data processing and detection unit.

In a further embodiment, the malfunction detection system further comprises an electronic control unit on a body of the vehicle, wherein the electronic control unit comprises the failure detection unit and the motion data processing and detection unit. Moreover, the electronic control unit may comprise the motion sensor.

The malfunction detection system may further comprise a warning unit configured to emit a warning signal if a malfunction of the pressure sensor is determined.

A further aspect of the invention relates to a computer program product, comprising code tangibly embodied thereon, that when executed on a processor of a malfunction detection system according to any one of the embodiments described herein, causes the processor to perform a method according to any one of the embodiments described herein.

Additional advantages and features of the present invention will become apparent from the following description, taken in conjunction with the accompanying drawings.
- Figure 1: illustrates a tire pressure monitoring system;
- Figure 2: illustrates a tire with a tire-glued WU of a TPMS;
- Figure 3: illustrates fluctuations of the pressure in a tire when the tire is rolling on the ground;
- Figure 4a: illustrates fluctuations of the pressure in a rolling tire in the frequency domain for a vehicle moving at 35 miles per hour;
- Figure 4b: illustrates fluctuations of the pressure in a rolling tire in the frequency domain for a vehicle moving at 60 miles per hour;
- Figure 5: illustrates an embodiment of a system for detecting a malfunction of a pressure sensor;
- Figure 6: illustrates an embodiment of a pressure sensor malfunction detection system;
- Figure 7: illustrates a further embodiment of a pressure sensor malfunction detection system.

In the following description, irrespective of the figure number, identical elements or elements having identical effects are denoted with the same reference numerals, if not otherwise indicated.

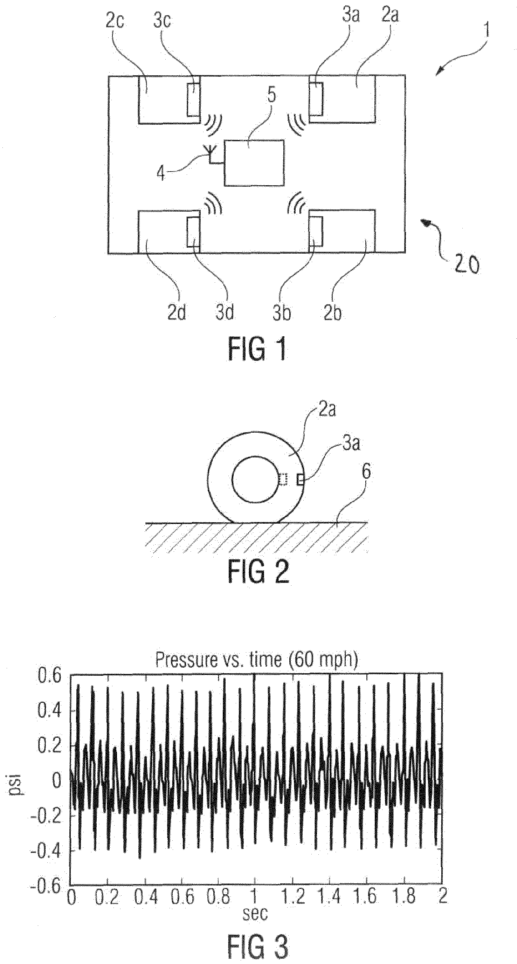

With reference to Figure **1****,** a tire pressure monitoring system (TPMS) **20** comprises wheel units (WUs) **3a-d** mounted on wheels **2a-d** of a vehicle **1** (for example a car or a commercial road vehicle) and an electronic control unit **5,** for example a body control unit (BCU), arranged on a body of the vehicle **1.** By means of one or several antennas **4,** the electronic control unit **5** receives signals emitted by transmitters (not illustrated) of the wheel units **3a-d.** The main purpose of the tire pressure monitoring system **20** is to monitor tire pressure, but other functions, such as wheel localization or load detection, may also be provided by the tire pressure monitoring system **20.**

With reference to Figure **2****,** wheel units may be glued to the tire or otherwise be mounted to the tire in order to measure the tire pressure. For reasons of clarity, only the wheel unit **3a** mounted on the wheel **2a** is illustrated in Figure **2****.** However, the further wheel units **3b-d** are mounted on the respective tires **2b-d** in a similar way. An alternative position for a wheel unit mounted to a rim of the wheel **2a** is given in dotted lines on the inner side of the wheel **2a** while reference sign **3a** illustrates a wheel unit mounted to an inner liner of the wheel **2a.**

While the vehicle is running, the wheels are rotating on a ground surface **6.** Upon getting and loosing contact with the ground, a temporary pressure wave occurs in the inside of the respective tire causing fluctuations of the tire pressure. As will be explained in detail below, the pressure fluctuations occurring during a rotation of the wheel of the vehicle to which the pressure sensor is mounted may be exploited to determine whether the pressure sensor works correctly or not.

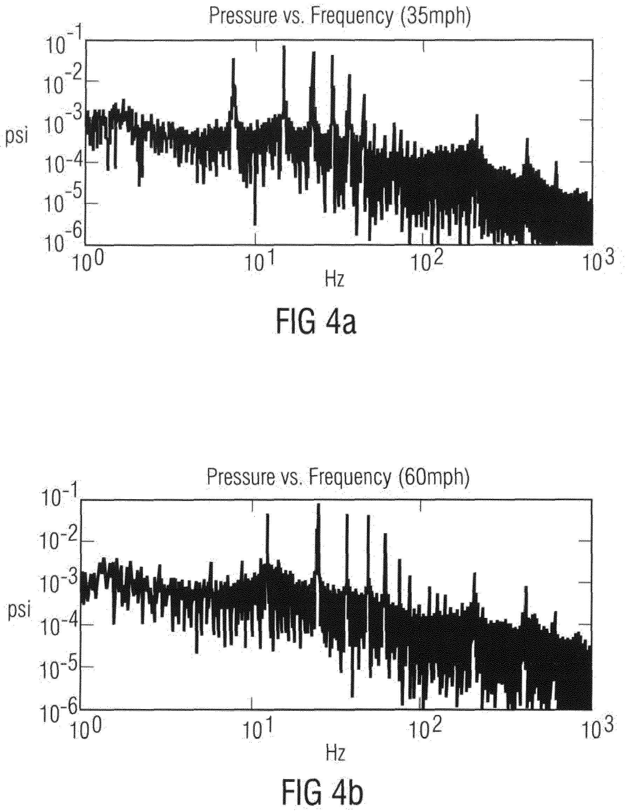

Figures **3****,** **4a** and **4b** are taken from US 7 260 984 B2. Figure **3** illustrates changes in pressure as measured by a pressure sensor during a rotation of a tire. On the axis of abscissae, the time in seconds is denoted, while on the axis of ordinate, the pressure change in pound-force per square inch (psi; 1 psi ≅ 6.89 kPa) is plotted. The pressure fluctuations are shown for a vehicle travelling at a speed of 60 miles per hour (approximately 96 km/h).

Using spectrum analysis, the pressure changes illustrated in Figure **3** may be resolved into various frequencies with various amplitudes. Exemplary plots of amplitude versus frequency of pressure changes generated within a rotating tire are illustrated in Figure **4a** for a vehicle travelling at a speed of 35 miles per hour (approximately 56 km/h) and in Figure **4b** for a vehicle travelling at a speed of 60 miles per hour. In Figures **4a** and **4b****,** on the axis of abscissae, the frequency in hertz is denoted, while on the axis of ordinate, the pressure in pound-force per square inch is illustrated. Figures **4a** and **4b** illustrate that there are a number of peaks of frequencies of pressure changes generated within a rotating tire.

In the framework of this invention, it was found that the pressure fluctuations occurring during a rotation of a wheel or a tire of the wheel may be exploited to determine whether a pressure sensor mounted to the respective wheel or tire works correctly or not. This is based on the consideration that, if the pressure sensor fails, the measured pressure no longer corresponds to the actual tire pressure, but instead, the pressure value provided by the defective pressure sensor typically becomes a constant value. Thus, if no pressure fluctuations are detected by the pressure sensor during a rotation of the wheel or of the tire, a malfunction of the pressure sensor may be detected.

An embodiment comprises a TPMS pressure sensor malfunction detection method comprising checking that, when the vehicle is in motion and the tire is rolling on the ground, the pressure values measured by the pressure sensor include small variations or oscillations according to the angular rotation speed of the wheel, such that the value of a measured pressure data parameter is larger than a threshold corresponding to the regular noise of the pressure transducer.

Further embodiments of the method include various approaches that are possible for pressure signal processing/analysis.

In particular, pressure signal processing and/or analysis may depend on the type of motion information.

Further, the following information may be analyzed and/or processed:
- basic information, such as vehicle moving or wheel rotating or not;
- standard information, such as vehicle speed or angular speed of the wheels; from this, also basic information may be derived;
- advanced information, such as angle reference for each of the rotating wheels or other signals having the same periodicity as the wheel; from this, both standard and basic information may be derived.

The signal processing and/or analysis approaches may provide increasing degrees of robustness but also of complexity and may be:
- an approach to evaluate the peak-to-peak variation of the samples, calculated as the peak to peak value of the pressure data from which the average value was subtracted. It may be used, for example, if the pressure signal is clean, i.e. essentially noiseless; only basic motion information is required;
- a slightly more complex way is to calculate the standard deviation of the samples, with the average subtracted; only basic motion information is required;
- more complex ways are to calculate the autocorrelation/autocovariance or to perform spectral/Fourier analysis. This way allows to detect oscillations, but also to estimate the rotation period or angular speed of the wheel. Only basic motion information is required; however, if vehicle speed or wheel angular speed is available, the estimated angular speed may be compared and validated using the known angular speed or rotation period;
- if advanced motion information is available, the statistical approach of cross-correlation/cross-covariance may be used. Alternatively, the signal processing or instrumentation technique known as synchronous detection may be used.

In all cases, if the noise is large, the number of samples may be increased.

According to particular embodiments, the malfunction detection threshold may be
- a constant value according to an a priori assumed noise value; an optimal value may be calculated using detection theory used in statistics and signal processing;
- a constant function: if the pressure sensor is nonlinear, transducer sensitivity and/or noise may depend on measured pressure value; for this case, optimal thresholds may be calculated for several pressure values, making up a function, possibly stored in a look-up table and used, possibly by interpolation, at the time of failure detection; the same approach may be applied for dependence on temperature, should there be a temperature sensor close to the pressure sensor;
- an adaptive value: if the pressure sensor noise varies slowly, for instance with the age of the sensor, noise level may be measured when the tire is still, and used to calculate a slowly changing/adaptive malfunction threshold that tracks sensor aging; this technique may be applied also in the case a function is used.

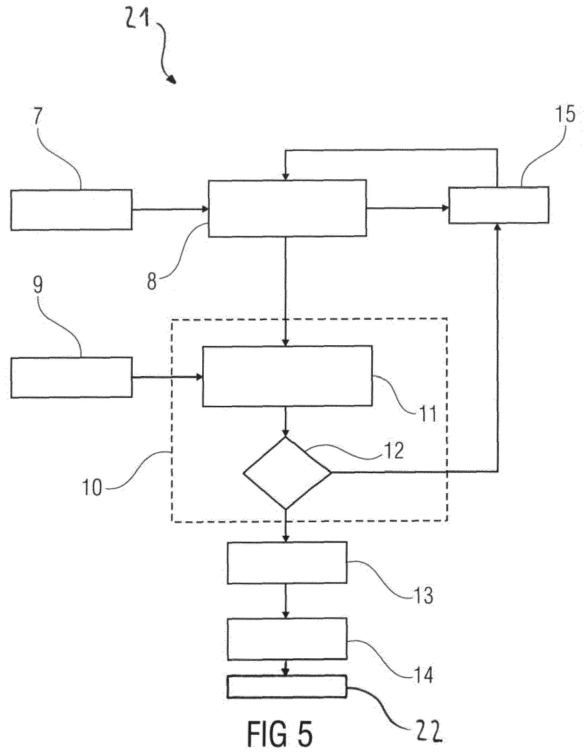

An embodiment of a malfunction detection system **21** for detecting a malfunction of a pressure sensor **9** is illustrated in Figure **5****.**

A motion sensor **7** acquires raw data that are processed by a motion data processing and detection unit **8,** which determines whether the tire to which the pressure sensor **9** is mounted or the vehicle is in motion.

In case the vehicle is not moving, delay unit **15,** possibly shared with the TPMS, waits a prescribed time for the next pressure measurement session. If the wheel is rotating, data from the pressure sensor **9,** mounted on the tire, is collected and a failure detection unit **10** is activated.

The pressure sensor **9** typically has a bandwidth large enough to include frequencies as shown in Figures **4a** and **4b****,** specifically at least the fundamental frequency corresponding to a maximum vehicle speed. Also, its resolution typically is such that the variations illustrated in Figure **3** may be captured.

The failure detection unit **10** comprises a data processing and analysis unit **11** and a malfunction decision unit **12.** Pressure data processing and analysis results in a pressure data parameter characterizing the variations of the pressure values. If needed, data processing performed in the data processing and analysis unit **11** may include motion data from the motion data processing and detection unit **8.** The malfunction decision unit **12** compares the pressure data parameter with a predetermined threshold value characterizing a noise value of the pressure sensor. For example, the predetermined threshold value is a function of the regular pressure sensor noise, which is present when the tire is not rolling.

One outcome of the decision unit **12** may be that the data display normal pressure variations or oscillations, meaning that the pressure sensor **9** is working properly. In this case, delay unit **15,** possibly shared with the TPMS, waits until a new measurement session starts and the process is retaken.

Another outcome of the decision unit **12** may be that, within expected noise, the pressure data are constant and the pressure sensor **9** malfunctions. In that case, an optional wheel identification unit **13,** possibly belonging to the TPMS localization function, determines the wheel from which the malfunction decision originates. Eventually, a malfunction warning signal transmitter **14,** possibly shared with the TPMS, sends a malfunction warning signal to a warning unit **22,** for example a vehicle driver's display. The warning unit **22** emits a warning signal to inform a user of the vehicle, for example a driver of the vehicle, that a malfunction of the pressure sensor **9** was detected.

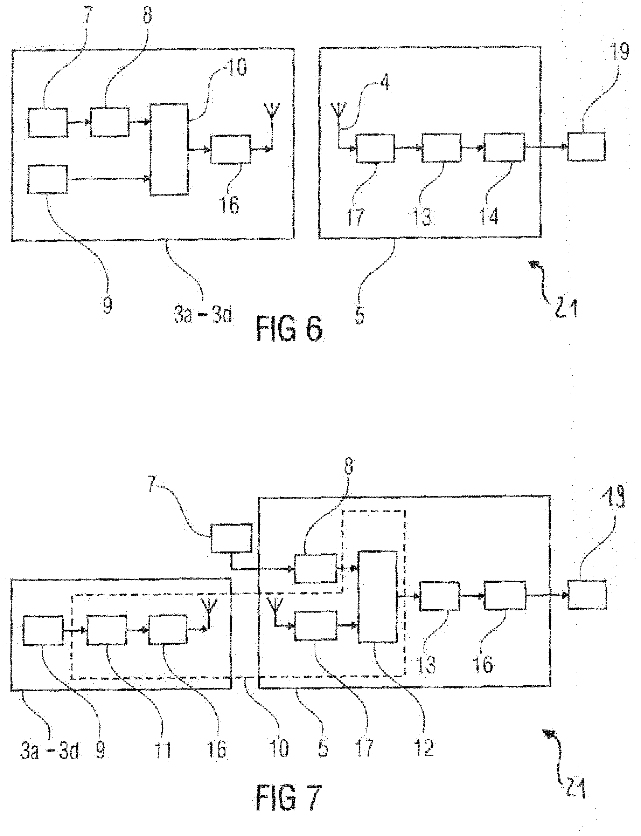

TPMS and their failure detection systems are shared between WUs and an electronic control unit, for example a BCU, on the vehicle. Consequently, a means to communicate data from the WU to the BCU is also present. To keep the figure as comprehensible as possible, this communication is not illustrated here. However, such means are represented in the more specific Figures **6** and **7****.**

According to embodiments, the sensor malfunction detection system may use, as motion sensor **7,** inputs from at least one of several motion or motion-related sensors or systems, existing on the vehicle or its own sensor, as used to provide additional information for advanced functions of the TPMS:
- an accelerometer that measures the radial acceleration on a WU comprising the pressure sensor; (acceleration transducers may be positioned at the positions, where wheel units are illustrated in Figure **2****,** e.g. at the outer or inner rim of the wheel);
- a piezoelectric bending or shock transducer (generally, any sensor arranged for detecting tire contact with the road, preferably mounted to the wheel unit WU);
- a vehicle tachometer;
- a vehicle position and speed provided by a GPS system;
- a vehicle longitudinal acceleration, provided by the engine or another vehicle system;
- an accelerometer for longitudinal direction of the vehicle, specifically mounted on the BCU, in case the TPMS is not to be connected to the vehicle information bus;
- a wheel rotation angle/ticks or angular speed of the wheels, provided by a vehicle ABS system.

According to embodiments, the pressure data processing and analysis unit **11** may implement one or more of the following processing ways:
- calculate the peak-to-peak value of pressure data from which the average value was subtracted;
- calculate the standard deviation of pressure data from which the average value was subtracted;
- calculate autocorrelation/autocovariance of pressure data,
- perform spectral/Fourier analysis of pressure data;
- calculate cross-correlation/cross-covariance between pressure and motion angular data from a wheel motion sensor;
- perform synchronous detection of pressure data from which the average value was subtracted, using a phase angular reference from a wheel motion sensor.

Since the TPMS comprises the WUs and an electronic control unit, for example a BCU, the malfunction detection system is based on the two components. Accordingly, and also according to the specific motion sensor that is used, the system described earlier may be built in several ways. Two examples are given: one where the malfunction detection is performed on the WU, and one where the WU is kept as simple as possible and the failure detection unit is mainly on the BCU. Between these, other structures are possible and are equally within the scope of the method and system described herein.

An embodiment, where most of a malfunction detection system **21** and the entire failure detection unit **10** are built in the WU is illustrated in Figure **6****.** Each of the wheel units **3a-3d** comprises a pressure sensor **9.** It provides data to the pressure data processing and analysis unit (**11,** not shown) inside the failure detection unit **10.** On the other hand, a motion sensor **7** and a motion data processing and detection unit **8** are also provided in the wheel units **3a-3d.** Processed pressure and motion data are inputs to the malfunction decision unit (**12,** not shown) comprised in the failure detection unit **10.** If a malfunction is detected, a wheel unit transmitter **16** and its antenna send a message to the electronic control unit **5,** which for example is a BCU. The message is taken by an antenna **4** of the electronic control unit **5** and its receiver **17** to an optional wheel identification unit **13** and, via a malfunction message transmitter **14,** to a vehicle driver display **19.** Thus, the malfunction detection is performed on the WU and the BCU role is minimal. Elements **16, 4** and **17** make up the communication between the WU and the BCU. Together with the pressure sensor **9** and the wheel identification unit **13,** they may be parts of the original TPMS on which the malfunction detection system **21** is built.

It may be noted that Figure **6** also defines a WU that includes a pressure and a motion sensor and is self-diagnosing its pressure sensor malfunction. This is possible because only information that is locally available on the wheel unit is used for the diagnosis. Of course, other TPMS processes are carried out by the WU, for example, a process that measures the tire pressure and sends it to the vehicle-based receiver **17.**

An embodiment of a malfunction detection system **21** for detecting a malfunction of a TPMS pressure sensor **9,** where the system **21** is shared between the WU and the BCU, is illustrated in Figure **7****.**

Here, the wheel units **3a-3d** each comprise a pressure sensor **9,** a pressure data processing and analysis unit **11** and a transmitter **16.** It is the BCU that detects the motion, by using the processed pressure signal received by a receiver **17,** and the motion signal provided by a motion sensor **7** or an input from a motion-related sensor or system on the vehicle and processed by the motion data processing and detection unit **8.** Thus, of the failure detection unit **10,** the pressure data processing and analysis unit **11** is on the WU and the malfunction decision unit **12** is on the BCU. If a malfunction is detected, the malfunctioning pressure sensor **9** may be identified by the wheel identification unit **13.** The malfunction message is sent, via the malfunction message transmitter **16,** to the vehicle driver display **19.** The pressure sensor **9,** the transmitter **16,** the receiver **17,** their antennae, and the wheel identification unit **13** may be parts of the original TPMS on which the malfunction detection system **21** is built.

In particular embodiments of the systems **21** illustrated in Figures **5****,** **6** and **7****,** specific units like the motion data processing and detection unit **8** and the components of the pressure sensor failure detection unit **10,** specifically the pressure data processing and analysis unit **11** and the malfunction decision unit **12,** may be implemented as hardware units. Alternatively, some or all of said units may be implemented as software components running on microcontrollers on the WU and/or the BCU.

Particular embodiments of the systems **21** in Figures **6** and **7** may use ways to transmit signals from the WU to the BCU that are different from radio frequency transmission. Such ways may be, but are not limited to: optical, ultrasound, and/or magnetic field. In those cases the transmitter, transmitting antenna, receiving antenna and the receiver are designed according to the properties of the specific transmission way.

The explanations with regard to the figures and embodiments should be understood in an illustrative way, rather than in a restrictive sense. Modifications may be made to the embodiments without departing from the scope of the invention as set forth in the appended claims.

### Reference numerals

- 1: Vehicle
- 2a-2d: Wheels
- 3a-3d: Wheel units
- 4: Antenna
- 5: Electronic control unit
- 6: Ground surface
- 7: Motion sensor
- 8: Motion data processing and detection unit
- 9: Pressure sensor
- 10: Failure detection unit
- 11: Data processing and analysis unit
- 12: Malfunction decision unit
- 13: Wheel identification unit
- 14: Transmitter
- 15: Delay unit
- 16: Transmitter
- 17: Receiver
- 18: Wheel identification unit
- 19: Display
- 20: Tire pressure monitoring system
- 21: System
- 22: Warning unit

## Claims

1. Method for detecting a malfunction of a pressure sensor (9) of a tire pressure monitoring system (20) of a vehicle (1), wherein, when the vehicle (1) is in motion and a wheel (2a-d) of the vehicle (1) to which the pressure sensor (9) is mounted is rolling on a ground, pressure values measured by the pressure sensor (9) are analyzed to determine if the pressure values include variations, **characterized in that** a malfunction of the pressure sensor (9) is determined based on a comparison of a value of a pressure data parameter characterizing the variations and a threshold value characterizing a noise value of the pressure sensor (9).

2. Method according to claim 1, wherein a malfunction of the pressure sensor (9) is determined if the value of the pressure data parameter is smaller than the threshold value.

3. Method according to claim 1 or claim 2, wherein the pressure values measured by the pressure sensor (9) are analyzed to determine if the pressure values include variations corresponding to an angular rotation speed and/or a rotation angle of the wheel (2a-d).

4. Method according to any one of the preceding claims, wherein the pressure data parameter is determined by at least one of:
- determining a peak-to-peak variation of the pressure values from which an average pressure value is subtracted;
- determining a standard deviation of the pressure values from which an average pressure value is subtracted;
- performing an autocorrelation and/or an autocovariance of the pressure values;
- performing a spectral analysis and/or a Fourier analysis of the pressure values;
- determining a cross-correlation and/or a cross-covariance between the pressure values and angular motion data from a wheel motion sensor; and
- performing a synchronous detection of pressure data from which an average pressure value is subtracted, using a rotation angle information from a wheel motion sensor.

5. Method according to any one of claims 2 to 4, wherein the threshold value is selected from the group consisting of
- a constant value characterizing an assumed noise value of the pressure sensor (9) and a constant sensitivity of the pressure sensor (9);
- a function based on an actual pressure and/or an actual temperature of the wheel (2a-d);
- an adaptive value or an adaptive function, determined based on a noise value of the pressure sensor (9) measured when the wheel (2a-d) is standing still.

6. Malfunction detection system for detecting a malfunction of a pressure sensor (9) of a tire pressure monitoring system (20) of a vehicle (1) comprising:
- a motion sensor (7) and a motion data processing and detection unit (8) configured to determine if a wheel (2a-d) of the vehicle (1) to which the pressure sensor (9) is mounted is rolling on a ground;
- a failure detection unit (10) configured to analyze pressure values measured by the pressure sensor (9) to determine if the pressure values include variations, **characterized in that** the failure detection unit (10) is configured to determine a malfunction of the pressure sensor (9) based on a comparison of a value of a pressure data parameter characterizing the variations and a threshold value characterizing a noise value of the pressure sensor (9).

7. Malfunction detection system according to claim 6, wherein the motion data processing and detection unit (8) is configured to activate the failure detection unit (10).

8. Malfunction detection system according to claim 6 or claim 7, wherein the failure detection unit (10) is configured to determine a malfunction of the pressure sensor (9) if the value of the pressure data parameter is smaller than the threshold value.

9. Malfunction detection system according to any one of claims 6 to 8, wherein the failure detection unit (10) is configured to analyze the pressure values measured by the pressure sensor (9) to determine if the pressure values include variations corresponding to an angular rotation speed and/or a rotation angle of the wheel (2a-d).

10. Malfunction detection system according to any one of claims 6 to 9, wherein the motion sensor (7) and/or the motion data processing and detection unit (8) comprise at least one of
- an acceleration sensor;
- a sensor configured to detect a contact of the tire with a ground;
- a tachometer; and
- a navigation system.

11. Malfunction detection system according to any one of claims 6 to 10, wherein the failure detection unit (10) is configured to determine the pressure data parameter by at least one of:
- determining a peak-to-peak variation of the pressure values from which an average pressure value is subtracted;
- determining a standard deviation of the pressure values from which an average pressure value is subtracted;
- performing an autocorrelation and/or an autocovariance of the pressure values;
- performing a spectral analysis and/or a Fourier analysis of the pressure values;
- determining a cross-correlation and/or a cross-covariance between the pressure values and angular motion data from a wheel motion sensor; and
- performing a synchronous detection of pressure data from which an average pressure value is subtracted, using a rotation angle information from a wheel motion sensor.

12. Malfunction detection system according to any one of claims 6 to 11, further comprising a wheel unit (3a-3d) mounted to the wheel (2a-d), wherein the wheel unit (3a-3d) comprises the pressure sensor (9), the failure detection unit (10), the motion sensor (7) and the motion data processing and detection unit (8).

13. Malfunction detection system according to any one of claims 6 to 11, further comprising an electronic control unit (5) on a body of the vehicle (1), wherein the electronic control unit (5) comprises the failure detection unit (10) and the motion data processing and detection unit (8).

14. Malfunction detection system according to any one of claims 6 to 13, further comprising a warning unit (22) configured to emit a warning signal if a malfunction of the pressure sensor (9) is determined.

15. A computer program product, comprising code tangibly embodied thereon, that when executed on a processor of a malfunction detection system according to any one of claims 6 to 14, causes the processor to perform a method according to any one of claims 1 to 5.

## Patentansprüche

1. Verfahren zum Detektieren einer Fehlfunktion eines Drucksensors (9) eines Reifendrucküberwachungssystems (20) eines Fahrzeugs (1), wobei, wenn das Fahrzeug (1) in Bewegung ist und ein Rad (2a-d) des Fahrzeugs (1), an dem der Drucksensor (9) angebracht ist, auf einem Untergrund rollt, vom Drucksensor (9) gemessene Druckwerte analysiert werden, um zu bestimmen, ob die Druckwerte Schwankungen aufweisen, **dadurch gekennzeichnet, dass** eine Fehlfunktion des Drucksensors (9) basierend auf einem Vergleich des Wertes eines Druckdatenparameters, der die Schwankungen charakterisiert, und eines Schwellenwertes, der einen Rauschwert des Drucksensors (9) charakterisiert, bestimmt wird.

2. Verfahren gemäß Anspruch 1, wobei eine Fehlfunktion des Drucksensors (9) bestimmt wird, wenn der Wert des Druckdatenparameters kleiner ist als der Schwellenwert.

3. Verfahren gemäß Anspruch 1 oder Anspruch 2, wobei die vom Drucksensor (9) gemessenen Druckwerte analysiert werden, um zu bestimmen, ob die Druckwerte Schwankungen aufweisen, die einer Winkeldrehgeschwindigkeit und/oder einem Drehwinkel des Rades (2a-d) entsprechen.

4. Verfahren gemäß einem der vorstehenden Ansprüche, wobei der Druckdatenparameter durch wenigstens eines der folgenden bestimmt wird:
- Bestimmen einer Spitze-zu-Spitze-Schwankung der Druckwerte, von der ein Durchschnittsdruckwert abgezogen wird;
- Bestimmen einer Standardabweichung der Druckwerte, von der ein Durchschnittsdruckwert abgezogen wird;
- Durchführen einer Autokorrelation und/oder Autokovarianz der Druckwerte;
- Durchführen einer Spektralanalyse und/oder einer Fourieranalyse der Druckwerte;
- Bestimmen einer Kreuzkorrelation und/oder Kreuzkovarianz zwischen den Druckwerten und Winkelbewegungsdaten von einem Radbewegungssensor; und
- Durchführen einer Synchrondetektion der Druckdaten, von denen ein Durchschnittsdruckwert abgezogen wird, unter Verwendung einer Drehwinkelinformation von einem Radbewegungssensor.

5. Verfahren gemäß einem der Ansprüche 2 bis 4, wobei der Schwellenwert ausgewählt ist aus der Gruppe bestehend aus
- einem Konstantwert, der einen angenommenen Rauschwert des Drucksensors (9) und eine konstante Empfindlichkeit des Drucksensors (9) charakterisiert;
- einer Funktion basierend auf einem tatsächlichen Druck und/oder einer tatsächlichen Temperatur des Rades (2a-d);
- einem adaptiven Wert oder einer adaptiven Funktion, die basierend auf einem Rauschwert des Drucksensors (9), welcher bei Stillstand des Rades (2a-d) gemessen wird, bestimmt wird.

6. Fehlfunktionsdetektionssystem zum Detektieren einer Fehlfunktion eines Drucksensors (9) eines Reifendruckkontrollsystems (20) eines Fahrzeugs (1), aufweisend:
- einen Bewegungssensor (7) und eine Bewegungsdatenverarbeitungs- und -detektionseinheit (8), die dafür ausgebildet ist zu bestimmen, ob ein Rad (2a-d) des Fahrzeugs (1), an dem der Drucksensor (9) angebracht ist, auf einem Untergrund rollt;
- eine Fehlererkennungseinheit (10), die dafür ausgebildet ist, vom Drucksensor (9) gemessene Druckwerte zu analysieren, um zu bestimmen, ob die Druckwerte Schwankungen aufweisen, **dadurch gekennzeichnet, dass** die Fehlererkennungseinheit (10) dafür ausgebildet ist, eine Fehlfunktion des Drucksensors (9) basierend auf einem Vergleich des Wertes eines Druckdatenparameters, der die Schwankungen charakterisiert, und eines Schwellenwertes, der einen Rauschwert des Drucksensors (9) charakterisiert, zu bestimmen.

7. Fehlfunktionsdetektionssystem gemäß Anspruch 6, wobei die Bewegungsdatenverarbeitungs- und -detektionseinheit (8) dafür ausgebildet ist, die Fehlererkennungseinheit (10) zu aktivieren.

8. Fehlfunktionsdetektionssystem gemäß Anspruch 6 oder Anspruch 7, wobei die Fehlererkennungseinheit (10) dafür ausgebildet ist, eine Fehlfunktion des Drucksensors (9) zu bestimmen, wenn der Wert des Druckdatenparameters kleiner ist als der Schwellenwert.

9. Fehlfunktionsdetektionssystem gemäß einem der Ansprüche 6 bis 8, wobei die Fehlererkennungseinheit (10) dafür ausgebildet ist, die vom Drucksensor (9) gemessenen Druckwerte zu analysieren, um zu bestimmen, ob die Druckwerte Schwankungen aufweisen, die einer Winkeldrehgeschwindigkeit und/oder einem Drehwinkel des Rades (2a-d) entsprechen.

10. Fehlfunktionsdetektionssystem gemäß einem der Ansprüche 6 bis 9, wobei der Bewegungssensor (7) und/oder die Bewegungsdatenverarbeitungs- und -detektionseinheit (8) wenigstens eines der folgenden aufweist
- einen Beschleunigungssensor;
- einen Sensor, der dafür ausgebildet ist, einen Kontakt des Reifens mit einem Untergrund zu erkennen;
- ein Tachometer; und
- ein Navigationssystem.

11. Fehlfunktionsdetektionssystem gemäß einem der Ansprüche 6 bis 10, wobei die Fehlererkennungseinheit (10) dafür ausgebildet ist, den Druckdatenparameter durch wenigstens eines der folgenden zu bestimmen:
- Bestimmen einer Spitze-zu-Spitze-Schwankung der Druckwerte, von der ein Durchschnittsdruckwert abgezogen wird;
- Bestimmen einer Standardabweichung der Druckwerte, von der ein Durchschnittsdruckwert abgezogen wird;
- Durchführen einer Autokorrelation und/oder Autokovarianz der Druckwerte;
- Durchführen einer Spektralanalyse und/oder einer Fourieranalyse der Druckwerte;
- Bestimmen einer Kreuzkorrelation und/oder Kreuzkovarianz zwischen den Druckwerten und Winkelbewegungsdaten von einem Radbewegungssensor; und
- Durchführen einer Synchrondetektion der Druckdaten, von denen ein Durchschnittsdruckwert abgezogen wird, unter Verwendung einer Drehwinkelinformation von einem Radbewegungssensor.

12. Fehlfunktionsdetektionssystem gemäß einem der Ansprüche 6 bis 11, ferner aufweisend eine Radeinheit (3a-3d), die am Rad (2a-d) angebracht ist, wobei die Radeinheit (3a-3d) den Drucksensor (9), die Fehlererkennungseinheit (10), den Bewegungssensor (7) und die Bewegungsdatenverarbeitungs- und -detektionseinheit (8) aufweist.

13. Fehlfunktionsdetektionssystem gemäß einem der Ansprüche 6 bis 11, ferner aufweisend eine elektronische Steuereinheit (5) an der Karosserie des Fahrzeugs (1), wobei die elektronische Steuereinheit (5) die Fehlererkennungseinheit (10) und die Bewegungsdatenverarbeitungs- und -detektionseinheit (8) aufweist.

14. Fehlfunktionsdetektionssystem gemäß einem der Ansprüche 6 bis 13, ferner aufweisend eine Warneinheit (22), die dafür ausgebildet ist ein Warnsignal auszugeben, wenn eine Fehlfunktion des Drucksensors (9) bestimmt wird.

15. Computerprogrammprodukt, aufweisend physisch darauf ausgeführten Code, der, wenn er auf einem Prozessor eines Fehlfunktionsdetektionssystems gemäß einem der Ansprüche 6 bis 14 ausgeführt wird, bewirkt, dass der Prozessor ein Verfahren gemäß einem der Ansprüche 1 bis 5 ausführt.

## Revendications

1. Procédé de détection d'un dysfonctionnement d'un capteur de pression (9) d'un système de surveillance de la pression de pneu (20) d'un véhicule (1), procédé selon lequel, lorsque le véhicule (1) est en mouvement et une roue (2a-d) du véhicule (1) sur laquelle est monté le capteur de pression (9) roule sur un sol, des valeurs de pression mesurées par le capteur de pression (9) sont analysées afin de déterminer si les valeurs de pression contiennent des variations, **caractérisé en ce qu'**un dysfonctionnement du capteur de pression (9) est déterminé en s'appuyant sur une comparaison d'une valeur d'un paramètre de données de pression qui caractérise les variations et d'une valeur de seuil qui caractérise une valeur de bruit du capteur de pression (9).

2. Procédé selon la revendication 1, selon lequel un dysfonctionnement du capteur de pression (9) est déterminé si la valeur du paramètre de données de pression est inférieure à la valeur de seuil.

3. Procédé selon la revendication 1 ou la revendication 2, selon lequel les valeurs de pression mesurées par le capteur de pression (9) sont analysées afin de déterminer si les valeurs de pression contiennent des variations correspondant à une vitesse de rotation angulaire et/ou à un angle de rotation de la roue (2a-d).

4. Procédé selon l'une quelconque des revendications précédentes, selon lequel le paramètre de données de pression est déterminé par au moins l'une des opérations suivantes :
- détermination d'une variation crête à crête des valeurs de pression desquelles est soustraite une valeur de pression moyenne ;
- détermination d'un écart-type des valeurs de pression desquelles est soustraite une valeur de pression moyenne ;
- réalisation d'une autocorrélation et/ou d'une autocovariance des valeurs de pression ;
- réalisation d'une analyse spectrale et/ou d'une analyse de Fourier des valeurs de pression ;
- détermination d'une corrélation croisée et/ou d'une covariance croisée entre les valeurs de pression et les données de mouvement angulaire d'un capteur de mouvement de roue ; et
- réalisation d'une détection synchrone de données de pression desquelles est soustraite une valeur de pression moyenne en utilisant une information d'angle de rotation d'un capteur de mouvement de roue.

5. Procédé selon l'une quelconque des revendications 2 à 4, selon lequel la valeur de seuil est sélectionnée dans le groupe composé de
- une valeur constante qui caractérise une valeur de bruit supposée du capteur de pression (9) et une sensibilité constante du capteur de pression (9) ;
- une fonction basée sur une pression réelle et/ou une température réelle de la roue (2a-d) ;
- une valeur adaptative ou une fonction adaptative, déterminée en se basant sur une valeur de bruit du capteur de pression (9) mesurée lorsque la roue (2a-d) est immobile.

6. Système de détection de dysfonctionnement destiné à détecter un dysfonctionnement d'un capteur de pression (9) d'un système de surveillance de la pression de pneu (20) d'un véhicule (1), comprenant :
- un capteur de mouvement (7) et une unité de traitement et de détection de données de mouvement (8) configurée pour déterminer si une roue (2a-d) du véhicule (1) sur laquelle est monté le capteur de pression (9) roule sur un sol ;
- une unité de détection de défaillance (10) configurée pour analyser les valeurs de pression mesurées par le capteur de pression (9) afin de déterminer si les valeurs de pression contiennent des variations, **caractérisé en ce que** l'unité de détection de défaillance (10) est configurée pour déterminer un dysfonctionnement du capteur de pression (9) en s'appuyant sur une comparaison d'une valeur d'un paramètre de données de pression qui caractérise les variations et une valeur de seuil qui caractérise une valeur de bruit du capteur de pression (9).

7. Système de détection de dysfonctionnement selon la revendication 6, selon lequel l'unité de traitement et de détection de données de mouvement (8) est configurée pour activer l'unité de détection de défaillance (10).

8. Système de détection de dysfonctionnement selon la revendication 6 ou la revendication 7, selon lequel l'unité de détection de défaillance (10) est configurée pour déterminer un dysfonctionnement du capteur de pression (9) si la valeur du paramètre de données de pression est inférieure à la valeur de seuil.

9. Système de détection de dysfonctionnement selon l'une quelconque des revendications 6 à 8, selon lequel l'unité de détection de défaillance (10) est configurée pour analyser les valeurs de pression mesurées par le capteur de pression (9) afin de déterminer si les valeurs de pression contiennent des variations correspondant à une vitesse de rotation angulaire et/ou à un angle de rotation de la roue (2a-d).

10. Système de détection de dysfonctionnement selon l'une quelconque des revendications 6 à 9, selon lequel le capteur de mouvement (7) et/ou l'unité de traitement et de détection de données de mouvement (8) comprennent au moins l'un des éléments suivantes :
- un capteur d'accélération ;
- un capteur configuré pour détecter un contact du pneu avec un sol ;
- un tachymètre ; et
- un système de navigation.

11. Système de détection de dysfonctionnement selon l'une quelconque des revendications 6 à 10, selon lequel l'unité de détection de défaillance (10) est configurée pour déterminer le paramètre de données de pression par au moins l'une des opérations suivantes :
- détermination d'une variation crête à crête des valeurs de pression desquelles est soustraite une valeur de pression moyenne ;
- détermination d'un écart-type des valeurs de pression desquelles est soustraite une valeur de pression moyenne ;
- réalisation d'une autocorrélation et/ou d'une autocovariance des valeurs de pression ;
- réalisation d'une analyse spectrale et/ou d'une analyse de Fourier des valeurs de pression ;
- détermination d'une corrélation croisée et/ou d'une covariance croisée entre les valeurs de pression et les données de mouvement angulaire d'un capteur de mouvement de roue ; et
- réalisation d'une détection synchrone de données de pression desquelles est soustraite une valeur de pression moyenne en utilisant une information d'angle de rotation d'un capteur de mouvement de roue.

12. Système de détection de dysfonctionnement selon l'une quelconque des revendications 6 à 11, comprenant en outre une unité de roue (3a-3d) montée sur la roue (2a-d), l'unité de roue (3a-3d) comprenant le capteur de pression (9), l'unité de détection de défaillance (10), le capteur de mouvement (7) et l'unité de traitement et de détection de données de mouvement (8).

13. Système de détection de dysfonctionnement selon l'une quelconque des revendications 6 à 11, comprenant en outre une unité de commande électronique (5) sur une carrosserie du véhicule (1), l'unité de commande électronique (5) comprenant l'unité de détection de défaillance (10) et l'unité de traitement et de détection de données de mouvement (8).

14. Système de détection de dysfonctionnement selon l'une quelconque des revendications 6 à 13, comprenant en outre une unité d'avertissement (22) configurée pour émettre un signal d'avertissement si un dysfonctionnement du capteur de pression (9) est déterminé.

15. Produit de programme informatique, comprenant un code incorporé de manière tangible dans celui-ci qui, lorsqu'il est exécuté sur un processeur d'un système de détection de dysfonctionnement selon l'une quelconque des revendications 6 à 14, amène le processeur à mettre en oeuvre un procédé selon l'une quelconque des revendications 1 à 5.
